# FASCICULE DE BREVET EUROPEEN

(11) **EP 2 222 984 B1**
(45) Date de publication et mention de la délivrance du brevet: **22.06.2011**
(21) Numéro de dépôt: 08872818.3
(22) Date de dépôt: 15.12.2008
(51) Int. Cl.: F16H 59/70, B03C 1/28, G01D 5/14

(54) **CAPTEUR DE POSITION D'UNE BOITE DE VITESSES ET BOITE DE VITESSES CORRESPONDANTE**
GETRIEBEPOSITIONSSENSOR UND ZUGEHÖRIGES GETRIEBE
GEARBOX POSITION SENSOR AND CORRESPONDING GEARBOX

(30) Priorité: 17.12.2007 FR 0708767
(43) Date de publication de la demande: 01.09.2010
(73) Titulaire: SC2N, 94000 Créteil (FR)
(72) Inventeur: GUIBET, Vincent, F-50500 Saint Hilaire Petitville (FR)
(74) Mandataire: de Lambilly Delorme, Marie Pierre
(86) Numéro de dépôt international: PCT/FR2008/001739
(87) Numéro de publication internationale: WO 2009/106701

(56) Documents cités:
- EP-A- 0 330 815
- DE-A1- 3 929 937
- DE-A1- 19 731 960
- KR-B1- 100 761 634
- US-A- 2 225 205
- US-B1- 6 205 858

## Description

La présente invention concerne un capteur de position d'une boîte de vitesses d'un véhicule automobile et une boîte de vitesses correspondante.

On connaît des capteurs de position de boîte de vitesses automatiques ou robotisées. Ces capteurs sont prévus dès la conception d'une boîte de vitesses et sont intégrés avec celle-ci, souvent au niveau des actionneurs permettant de faire des changements de vitesses. Pour ces capteurs, des technologies diverses sont appliquées. Par exemple, on connaît des capteurs de positionnement à base d'un potentiomètre pour connaître la position d'un actionneur et pour en déduire la position de la boîte de vitesses, c'est-à-dire si et quel rapport de vitesses est engagé.

D'autres technologies, comme des technologies magnétiques trouvent aussi depuis peu leur application dans le cadre des capteurs de position pour des boîtes de vitesses automatiques ou robotisées. Ces capteurs sont sensibles à la présence et ou à l'absence d'une cible mobile lui faisant face. Le document DE 3929937 A1 décrit un capteur selon le préambule de la revendication indépendante 1.

Toutefois, les boîtes de vitesses automobiles, notamment mécaniques, comportent des éléments en rotation à l'intérieur d'un carter lubrifié pouvant générer des contaminants métalliques, tels que la limaille de fer.

En fonctionnement, cette limaille de fer peut être projetée à proximité des capteurs à effet magnétique attirant et retenant celle-ci dans la zone à fort champ magnétique de l'entrefer situé entre le capteur et la cible, faussant ainsi la mesure.

Afin de palier à ces problèmes, l'invention propose un capteur de position d'une boîte de vitesses d'un véhicule automobile comportant un aimant et une sonde apte à mesurer un champ magnétique au niveau d'une extrémité sensible susceptible d'être en regard avec une cible mobile liée à un élément d'actionnement des rapports d'une boîte de vitesses pour déterminer la position dans l'espace de la cible et en déduire la position de la boîte de vitesses, caractérisé en ce qu'il comporte en outre au moins un élément ferromagnétique placé à la périphérie de l'extrémité sensible, pour piéger des contaminants métalliques.

Suivant d'autres caractéristiques du capteur de position,
- l'élément ferromagnétique présente la forme d'un anneau apte à coopérer avec une forme complémentaire dudit capteur,
- l'élément ferromagnétique est placé à l'extérieur d'une enveloppe dudit capteur et comporte de préférence des moyens de clippage aptes à coopérer avec l'enveloppe dudit capteur pour fixer l'élément ferromagnétique à l'enveloppe,
- l'élément ferromagnétique est placé à l'intérieur d'une enveloppe dudit capteur,
- l'élément ferromagnétique annulaire et l'aimant possèdent un axe de révolution commun,
- le capteur comporte une pluralité d'éléments ferromagnétiques placés en périphérie de l'extrémité sensible,
- la sonde est une sonde à effet Hall.

L'invention a aussi pour objet une boîte de vitesses de véhicule automobile comportant un élément d'actionnement des rapports et une cible mobile liée audit élément d'actionnement, caractérisée en ce qu'elle comprend un capteur de position tel que précédemment décrit.

Avantageusement, l'extrémité sensible du capteur de position fait face à ladite cible lorsque l'élément d'actionnement des rapports de la boîte de vitesses est au point mort.

D'autres avantages et caractéristiques apparaîtront à la lecture de la description de l'invention, ainsi que des dessins annexés sur lesquels :
- la figure 1 est une vue en perspective et de côté d'un capteur de position selon l'invention,
- la figure 2 est une vue schématique du capteur dans une boîte de vitesse,
- la figure 3 représente une vue schématique en coupe de l'extrémité du capteur et,
- la figure 4 représente l'extrémité du capteur de la figure 3 placée face à une cible de boîte de vitesses.

Sur ces figures, les éléments identiques portent les mêmes numéros de référence.

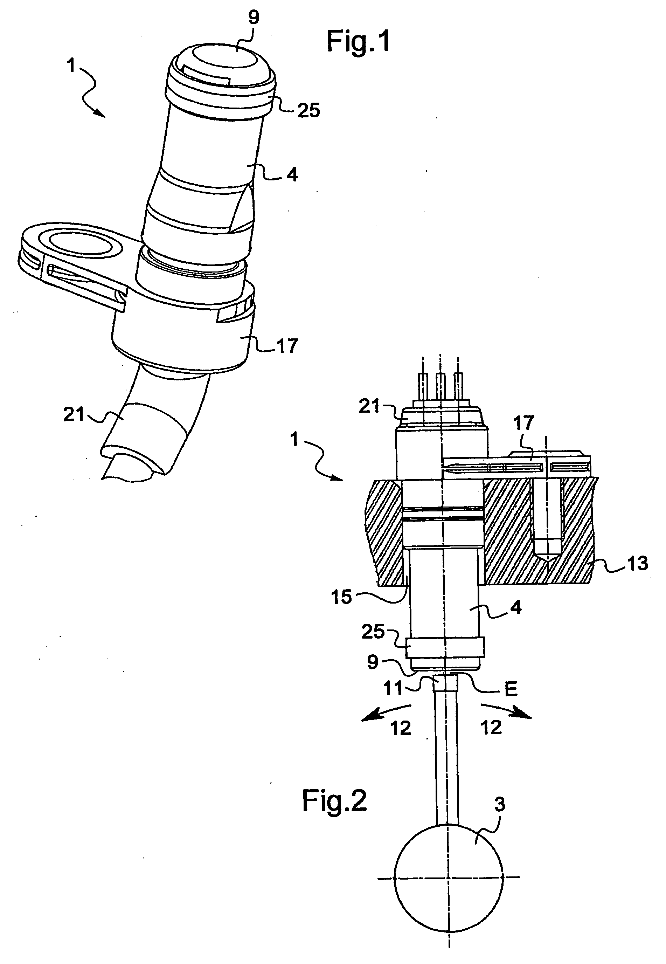

La figure 1 représente un capteur de position 1 selon l'invention, apte à être monté sur un carter 13 de boîte de vitesses manuelle ou automatique de véhicule automobile, pour déterminer la position de la boîte de vitesses.

Ce capteur 1 convient notamment pour la détection de point mort sur les véhicules équipés du système « STOP&START » gérant l'arrêt du moteur lorsque le véhicule s'arrête et qui le redémarre automatiquement ou sous l'ordre du conducteur.

La boîte de vitesses (non visible) comprend un élément d'actionnement 3 des divers rapports de vitesses (figure 2) en fonction des commandes appliquées par un levier de vitesses via une tringlerie (voir par exemple la boîte de vitesses décrite dans EP 0 273 874).

L'élément d'actionnement 3 peut être par exemple, une tige d'actionnement, une fourchette ou une came de la boîte de vitesses.

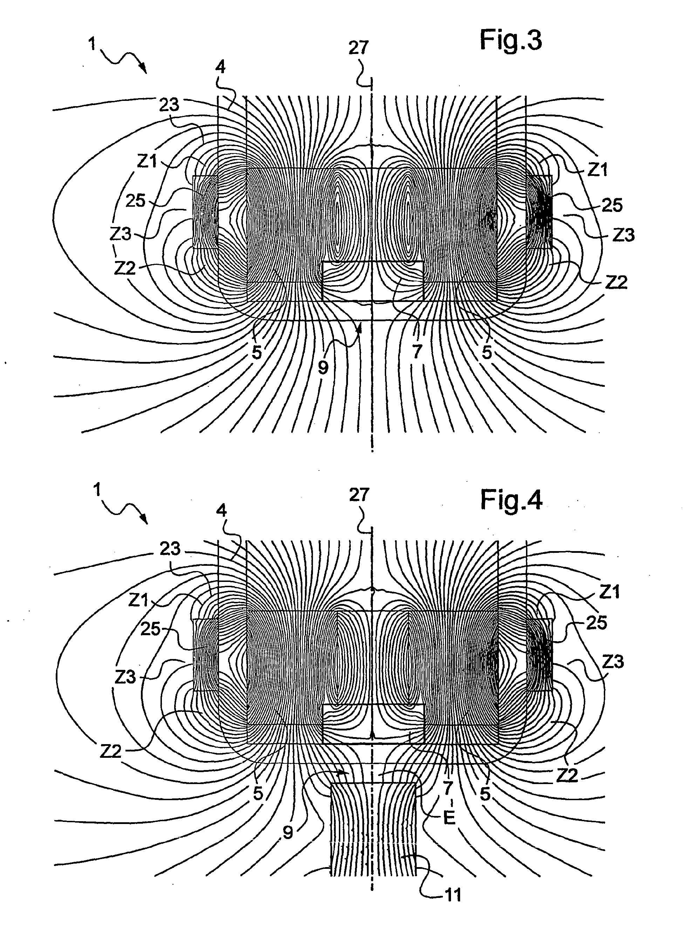

Comme mieux visible sur la figure 3, le capteur de position -1 comporte à l'intérieur d'une enveloppe 4 d'une part, un aimant 5 par exemple annulaire et d'autre part, une sonde 7 apte à mesurer un champ magnétique au niveau d'une extrémité sensible 9 du capteur 1.

La sonde est de préférence à effet Hall.

On peut aussi prévoir une sonde magnétorésistive.

L'extrémité sensible 9 est susceptible d'être en regard avec une cible 11 mobile liée à l'élément d'actionnement 3 des rapports de la boîte de vitesses pour déterminer la position dans l'espace de la cible 11 et en déduire la position de la boîte de vitesses.

La cible 11 est liée à l'élément d'actionnement 3 des rapports de la boîte de vitesses pour être mobile avec lui en rotation (voir flèches 12 sur la figure 2) ou en translation et être représentative d'une vitesse engagée ou du point mort.

Par exemple, l'extrémité 9 du capteur 1 fait face à la cible 11 lorsque la boîte de vitesses est au point mort.

La boîte de vitesse comporte un carter 13 isolant une zone intérieure de la boîte de vitesses lubrifiée d'une zone extérieure et traversé par le capteur 1 au niveau d'un passage étanche 15.

De préférence, le capteur 1 comporte une bride de fixation 17 pour fixer le capteur 1 au carter 13.

Le capteur 1 comporte en outre une enveloppe 4 comprenant avantageusement des moyens d'étanchéité aptes à coopérer avec le carter 13, pour pouvoir isoler la zone intérieure de la boîte de vitesses avec la zone extérieure.

Les moyens d'étanchéité comportent par exemple un joint d'étanchéité.

En outre, le capteur 1 comporte avantageusement au niveau de la zone extérieure du carter 13 un connecteur électrique 21 pouvant être relié à un câble pour notamment l'alimentation et la transmission des signaux du capteur 1 (voir figure 1).

Comme mieux visible sur la figure 3, l'aimant 5 est placé à proximité de la sonde 7, de sorte que la sonde 7 soit traversée par les lignes de champ magnétiques 23 formées entre l'aimant 5 et la cible 11.

Ainsi, lorsque la cible 11 est sensiblement face à la sonde 7, le champ magnétique de l'aimant 5 est déformé en direction de la cible 11 et la sonde 7 mesure une induction magnétique élevée au niveau d'un entrefer E entre le capteur 1 et la cible 11.

En revanche, lorsque la cible 11 est éloignée du capteur 1, le champ magnétique reboucle naturellement autour de l'aimant 5 et la sonde 7 mesure une induction magnétique faible.

Selon l'invention, le capteur 1 comporte au moins un élément ferromagnétique 25 placé à la périphérie de l'extrémité sensible 9, pour piéger des contaminants métalliques.

L'élément ferromagnétique 25 permet ainsi de créer deux zones Z1 et Z2 de champ magnétique fort, concentrées sur la périphérie de l'extrémité 9 pour attirer les contaminants métalliques au lieu que ceux-ci ne soient attirés dans l'entrefer E entre l'extrémité 9 et la cible 11.

Ainsi en fonctionnement, les contaminants sont attirés dans les zones Z1 et Z2 éloignées de l'extrémité sensible 9, de part et d'autre de l'élément ferromagnétique 25, de sorte qu'ils n'influencent pas la mesure réalisée par la sonde 7.

Par ailleurs, l'élément ferromagnétique 25 réduit le champ magnétique dans une troisième zone Z3 située à la périphérie de l'extrémité 9 du capteur 1, (figures 4 et 5) limitant ainsi l'attraction des contaminants sur le capteur 1.

En outre, les projections de lubrifiants ainsi que le mouvement de la cible 11 favorisent le déplacement des contaminants métalliques accrochés à l'extrémité sensible 9 vers les zones Z1 et Z2.

De manière très avantageuse, l'élément ferromagnétique 25 présente la forme d'un anneau apte à coopérer avec une forme complémentaire du capteur 1.

Ainsi, le bouclage des lignes de champs 23 entre l'aimant 5 et l'élément ferromagnétique annulaire 25 est optimisé.

Afin de faciliter le montage, on peut en outre prévoir un anneau 25 radialement sectionné et apte à s'écarter élastiquement afin d'être glissé dans une gorge correspondante de l'enveloppe 4 du capteur 1, de sorte qu'à l'état assemblé, l'anneau 25 soit fermé autour de l'extrémité 9 (non représenté).

Selon un premier mode de réalisation visible sur les figures 1 à 4, on prévoit que l'élément ferromagnétique 25 est placé à l'extérieur de l'enveloppe 4 du capteur 1.

Ainsi, l'élément ferromagnétique 25 forme une barrière permettant d'empêcher le ruissellement de contaminants le long de l'enveloppe 4 vers l'extrémité sensible 9.

En outre, avec un agencement extérieur de l'élément ferromagnétique 25, il est possible d'adapter facilement et à moindre coût les capteurs existants.

De préférence, l'élément ferromagnétique 25 comporte des moyens de clippage, aptes à coopérer avec l'enveloppe 4 du capteur 1 pour fixer l'élément ferromagnétique 25 à l'enveloppe 4.

Selon un deuxième mode de réalisation non représenté, on prévoit que l'élément ferromagnétique 25 est placé à l'intérieur de l'enveloppe 4 du capteur 1.

Avantageusement, l'élément magnétique annulaire 25 et l'aimant 5 possèdent un axe de révolution commun 27.

On peut prévoir en outre que le capteur 1 comporte une pluralité d'éléments ferromagnétiques 25 placés en périphérie de l'extrémité sensible 9.

On comprend qu'un capteur de position 1 de boîte de vitesses à effet magnétique comportant un élément ferromagnétique 25 placé à la périphérie de son extrémité sensible 9, permet de piéger des contaminants métalliques en dehors de l'extrémité sensible 9 susceptible d'être en regard avec la cible 11 pour la détermination de la position de la boîte de vitesse.

## Revendications

1. Capteur de position d'une boîte de vitesses d'un véhicule automobile comportant un aimant (5) et une sonde (7) apte à mesurer un champ magnétique au niveau d'une extrémité sensible (9) susceptible d'être en regard avec une cible mobile (11) liée à un élément d'actionnement (3) des rapports d'une boîte de vitesses pour déterminer la position dans l'espace de la cible (11) et en déduire la position de la boîte de vitesses, **caractérisé en ce qu'**il comporte en outre au moins un élément ferromagnétique (25) placé à la périphérie de l'extrémité sensible (9), pour piéger des contaminants métalliques.

2. Capteur de position selon la revendication 1, **caractérisé en ce que** l'élément ferromagnétique (25) présente la forme d'un anneau apte à coopérer avec une forme complémentaire dudit capteur (1).

3. Capteur de position selon l'une quelconque des revendications précédentes, **caractérisé en ce que** l'élément ferromagnétique (25) est placé à l'extérieur d'une enveloppe (4) dudit capteur (1).

4. Capteur de position selon la revendication 3, **caractérisé en ce que** l'élément ferromagnétique (25) comporte des moyens de clippage aptes à coopérer avec l'enveloppe (4) dudit capteur pour fixer l'élément ferromagnétique (25) à l'enveloppe (4).

5. Capteur de position selon l'une quelconque des revendications 1 ou 2, **caractérisé en ce que** l'élément ferromagnétique (25) est placé à l'intérieur d'une enveloppe (4) dudit capteur (1).

6. Capteur de position selon l'une quelconque des revendications 2 à 5, **caractérisé en ce que** l'élément ferromagnétique annulaire (25) et l'aimant (5) possèdent un axe de révolution commun (27).

7. Capteur de position selon l'une quelconque des revendications précédentes, **caractérisé en ce qu'**il comporte une pluralité d'éléments ferromagnétiques (25) placés en périphérie de l'extrémité sensible (9).

8. Capteur de position selon la revendication précédente, **caractérisé en ce que** la sonde (7) est une sonde à effet Hall.

9. Boîte de vitesses de véhicule automobile comportant un élément d'actionnement (3) des rapports et une cible mobile (11) liée audit élément d'actionnement (3), **caractérisée en ce qu'**elle comprend un capteur de position (1) selon l'une quelconque des revendications précédentes.

10. Boîte de vitesses selon la revendication précédente, **caractérisée en ce que** l'extrémité sensible (9) du capteur de position (1) fait face à ladite cible (11) lorsque l'élément d'actionnement (3) des rapports de la boîte de vitesses est au point mort.

## Claims

1. Motor vehicle gearbox position sensor comprising a magnet (5) and a probe (7) able to measure a magnetic field at a sensitive end (9) able to be placed facing a moving target (11) connected to an actuating element (3) used to select the gear ratios, in order to determine the position of the target (11) in space and from this deduce the position of the gearbox, **characterized in that** it further comprises at least one ferromagnetic element (25) positioned at the periphery of the sensitive end (9) to trap metallic contaminants.

2. Position sensor according to Claim 1, **characterized in that** the ferromagnetic element (25) is in the form of a ring able to collaborate with a complementary shape of said sensor (1).

3. Position sensor according to either one of the preceding claims, **characterized in that** the ferromagnetic element (25) is placed outside a casing (4) of said sensor (1).

4. Position sensor according to Claim 3, **characterized in that** the ferromagnetic element (25) comprises clip-fastening means able to collaborate with the casing (4) of said sensor so as to secure the ferromagnetic element (25) to the casing (4).

5. Position sensor according to either one of Claims 1 and 2, **characterized in that** the ferromagnetic element (25) is positioned inside a casing (4) of said sensor (1).

6. Position sensor according to any one of Claims 2 to 5, **characterized in that** the annular ferromagnetic element (25) and the magnet (5) have a common axis of revolution (27).

7. Position sensor according to any one of the preceding claims, **characterized in that** it comprises a plurality of ferromagnetic elements (25) positioned at the periphery of the sensitive end (9).

8. Position sensor according to the preceding claim, **characterized in that** the probe (7) is a Hall-effect probe.

9. Motor vehicle gearbox comprising an actuating element (3) for selecting the ratios and a moving target (11) connected to said actuating element (3), **characterized in that** it comprises a position sensor (1) according to any one of the preceding claims.

10. Gearbox according to the preceding claim, **characterized in that** the sensitive end (9) of the position sensor (1) faces said target (11) when the actuating element (3) that selects the gear ratios is in the neutral position.

## Patentansprüche

1. Stellungssensor für ein Schaltgetriebe eines Kraftfahrzeugs, der einen Magneten (5) und eine Sonde (7) enthält, die ein Magnetfeld messen kann, das auf Höhe eines Abfühlendes (9) vorhanden ist, das sich gegenüber einem beweglichen Ziel (11) befinden kann, das mit einem Betätigungselement (3) für Übersetzungsverhältnisse eines Schaltgetriebes verbunden sein kann, um die räumliche Position des Ziels (11) zu bestimmen und um daraus die Stellung des Schaltgetriebes abzuleiten, **dadurch gekennzeichnet, dass** er außerdem wenigstens ein ferromagnetisches Element (25) enthält, das am Umfang des Abfühlendes (9) angeordnet ist, um metallische Verunreinigungen einzufangen.

2. Stellungssensor nach Anspruch 1, **dadurch gekennzeichnet, dass** das ferromagnetische Element (25) die Form eines Rings aufweist, der mit einer komplementären Form des Sensors (1) zusammenwirken kann.

3. Stellungssensor nach einem der vorhergehenden Ansprüche, **dadurch gekennzeichnet, dass** das ferromagnetische Element (25) außerhalb einer Hülle (4) des Sensors (1) angeordnet ist.

4. Stellungssensor nach Anspruch 3, **dadurch gekennzeichnet, dass** das ferromagnetische Element (25) Einrastmittel aufweist, die mit der Hülle (4) des Sensors zusammenwirken können, um das ferromagnetische Element (25) an der Hülle (4) zu fixieren.

5. Stellungssensor nach einem der Ansprüche 1 oder 2, **dadurch gekennzeichnet, dass** das ferromagnetische Element (25) in einer Hülle (4) des Sensors (1) angeordnet ist.

6. Stellungssensor nach einem der Ansprüche 2 bis 5, **dadurch gekennzeichnet, dass** das ringförmige ferromagnetische Element (25) und der Magnet (5) eine gemeinsame Rotationssymmetrieachse (27) besitzen.

7. Stellungssensor nach einem der vorhergehenden Ansprüche, **dadurch gekennzeichnet, dass** er mehrere ferromagnetische Elemente (25) aufweist, die am Umfang des Abfühlendes (9) angeordnet sind.

8. Stellungssensor nach dem vorhergehenden Anspruch, **dadurch gekennzeichnet, dass** die Sonde (7) eine Hall-Effekt-Sonde ist.

9. Schaltgetriebe für Kraftfahrzeug, mit einem Betätigungselement (3) für die Übersetzungsverhältnisse und einem beweglichen Ziel (11), das mit dem Betätigungselement (3) verbunden ist, **dadurch gekennzeichnet, dass** es einen Stellungssensor (1) nach einem der vorhergehenden Ansprüche enthält.

10. Schaltgetriebe nach dem vorhergehenden Anspruch, **dadurch gekennzeichnet, dass** das Abfühlende (9) des Stellungssensors (1) dem Ziel (11) zugewandt ist, wenn das Betätigungselement (3) für die Übersetzungsverhältnisse des Schaltgetriebes am Totpunkt ist.
